Europäisches Patentamt

**European Patent Office**

Office européen des brevets

(19)

(11) Publication number: **0 015 329**
**B1**

(12) **EUROPEAN PATENT SPECIFICATION**

(45) Date of publication of patent specification: **07.03.84**

(21) Application number: **79300282.5**

(22) Date of filing: **22.02.79**

(51) Int. Cl.³: **G 01 V 1/155,**
**G 01 V 1/053, H 04 R 23/00**

(54) Seismic transducer construction.

(43) Date of publication of application:
**17.09.80 Bulletin 80/19**

(45) Publication of the grant of the patent:
**07.03.84 Bulletin 84/10**

(84) Designated Contracting States:
**FR GB IT NL SE**

(56) References cited:
**AT - B - 325 867**
**US - A - 3 159 233**
**US - A - 3 221 833**
**US - A - 3 983 957**

(73) Proprietor: CONOCO INC.
1000 South Pine Street P.O. Box 1267
Ponca City Oklahoma 74601 (US)

(72) Inventor: Fair, Delbert Wayne
2221 East Hartford
Ponsa City, Oklahoma (US)

(74) Representative: Rogers, Jack et al,
F.J. CLEVELAND & COMPANY 40/43 Chancery
Lane
London WC2A 1JQ (GB)

Courier Press, Leamington Spa, England.

Seismic transducer construction

The present invention relates generally to transducers for inducing vibrational signals in an elastic medium, and more particularly, but not by way of limitation, it relates to an improved construction for a transducer especially suitable for generating seismic shear waves in the earth for the purpose of seismograph surveying.

When practicing the system of vibrational seismographic exploration disclosed generally in our Patent US—A—2,688,124, a seismic signal of controlled frequency must be induced in the earth. The controlled signal then propagates downwardly and is reflected from subterranean interfaces upwardly and recorded as a composite signal having a plurality of the reflected controlled signals at various time phase positions on the record. The composite record is then correlated with the original transmitted signal to produce highly valuable seismic data.

A prior art transducer of general type is disclosed in our Patent US—A—3,159,233, said transducer comprising a mass member, a cylinder bore means extending through said mass member, piston member means reciprocally disposed in said cylinder bore means including a piston and a piston rod extending out of each side of the cylinder bore means and a frame inter-connecting the oppositely extending ends of said piston rods, said frame including first and second end plate means rigidly integral with said frame and having cleat means thereon for engaging the surface of the elastic medium and means for simultaneously introducing fluid under pressure into the cylinder bore alternately on opposite sides of the piston. These specific types of prior transducers had a particular problem that was inherent in the design; the problem was primarily concerned with the tendency of the mass member to rotate about the piston.

Prior art attempts at plural vibrator assemblies is particularly characterized by the system disclosed in our Patent US—A—3,777,843. This system utilized two separate vibrators earth-coupled through a single, unitary base plate in an attempt to better distribute vibrational forces over the whole of the base plate. Furthermore, in a prior Patent US—A—3,983,957 there is disclosed an earth vibrator having a mass member which is interconnected with the earth surface by a plurality of vibrating devices each comprising a cylinder and a piston having a piston rod connected to an earth engaging plate. However, such plural vibrating systems have proved to be difficult to synchronize and subsequently were relegated to limited usage.

Therefore, it is a general object of the present invention to provide a seismic transducer construction which is particularly applicable to the generation of shear waves.

Another object is to provide a seismic transducer construction which produces signals of lower frequency and of greater strength than can be produced by previously known shear wave transducers.

Yet another object of the present invention is to provide a transducer in which there is no tendency of the mass member to rotate about the piston member, whether used as a pressure wave or shear wave transducer.

A still further object is to provide a shear wave transducer construction which permits the cylinder center line to be located more closely to the surface of the elastic medium thereby to decrease the distance through which the frame must transmit the shear forces and also to reduce lateral rocking motion during operation.

Yet a further object is to provide a pressure wave seismic transducer construction which more evenly distributes the generated forces across the base plate that couples the energy into the earth.

Finally, it is an object of the invention to provide a basic transducer component which may be operated in either the vertical or horizontal position, with but minor structural modification, to generate either pressure waves or shear waves, respectively.

The present invention relates to a seismic transducer of the general type disclosed in our Patent US—A—3,159,233, the transducer being characterized in that:

the mass member has a plurality of parallel offset cylinder bores extending therethrough and a corresponding plurality of pistons and piston rods;

first and second port means are formed through one of the end plate means and extend axially through respective piston rods, said first port means communicating with a first side of each of said cylinder bores and said second port means communicating with the opposite side of each of said cylinder bores;

the fluid introducing means are provided for concurrently introducing fluid on the same side of the pistons for simultaneously reciprocating the pistons in concert; and

closure members are provided rigidly integral with said frame and enclosing said mass member and piston member means between said first and second end plate means.

The invention will now be described by way of example with reference to the accompanying drawings in which:

Fig. 1 is a front elevational view of a seismic transducer for generating seismic shear waves as constructed in accordance with the present invention, and as shown in partial cut-away schematic section to illustrate internal details of construction;

Fig. 2 is a top view in section of the end plates, piston members and mass member of a seismic transducer using plural hydraulic drive elements such as that of Fig. 1;

Fig. 3 is a side elevational view of the shear wave transducer of Fig. 1, and

Fig. 4 is a schematic side elevational view of a pressure (P) wave vibrator constructed in accordance with the present invention showing the center portion in section to illustrate details of construction.

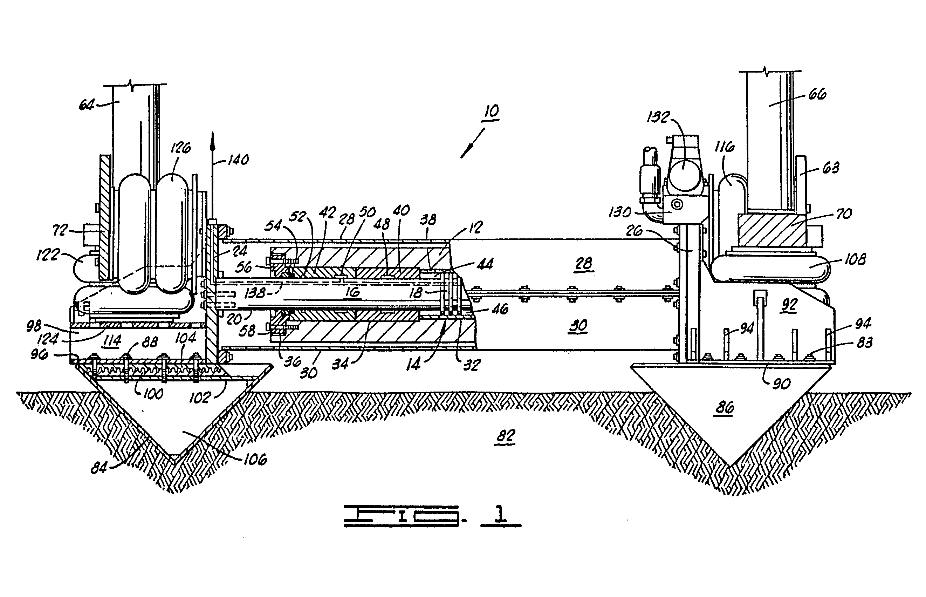

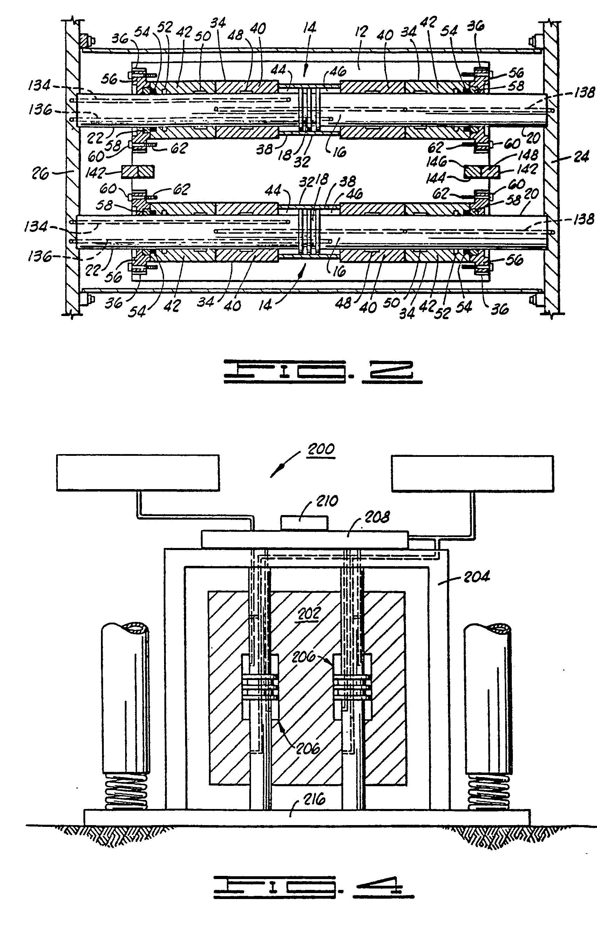

Referring now to the drawings, and in particular to Figs. 1 and 2, a shear wave transducer constructed in accordance with the present invention is indicated generally by the reference numeral 10. The transducer 10 is comprised of a reaction mass member, indicated generally by the reference numeral 12, as formed by casting or forging from high density metal. A pair of cylinder bores, each indicated by the reference numeral 14, extend through the reaction mass member 12 and a piston member 16 is reciprocally disposed within each such cylinder bore 14. Each piston member 16 is comprised of a piston 18 and opposite extending rods 20 and 22. A rigid frame, consisting of end plates 24 and 26 and upper and lower closure members 28 and 30, interconnects the ends of the rods 20 and 22 which protrude from the cylinder bores 14, as will be further described.

More specifically, the reaction mass member 12 is comprised of a mass block fabricated of a suitable material such as steel and having a desired cross-section, e.g., rectangular. The mass member 12 has two cylindrical bores 32 extending longitudinally therethrough with a first counterbore 34 and a second counterbore 36 in each end of each of the bores 32. A tubular cylinder sleeve 38 is disposed in each of the bores 32 and extends from the bottom of one counterbore 34 to the bottom of the opposite counterbore 34. The interior wall of each of the tubular cylinder sleeves 38 forms one of the cylinder bores 14 in which one of the pistons 18 is reciprocally disposed, and an inner bronze bearing insert 40 and an outer bronze bearing insert 42 are disposed within each of the one or more counterbores 34 to slidingly receive the piston rods 20 and 22, and also to form the ends of the hydraulic cylinders and thereby form fluid chambers 44 and 46 on either side of each of the pistons 18. The internal diameters of the bearings inserts 40 and 42 are provided with a plurality of small annular oil grooves which reduce the flow of hydraulic fluid from the high pressure in the cylinders to the low pressure returns. Additionally, each of the inner bearing inserts 40 has a relatively large inner fluid collecting groove 48, and each of the outer bearing inserts 42 has relatively large center and outer fluid collecting grooves 50 and 52 disposed within its internal diameter. Disposed within the internal diameter adjacent the outer face of each of the outer bearing inserts 42 is a groove seating resilient seal means 54.

A cylinder end cap 56 is disposed within each of the one or more counterbores 36, around each of the piston rods 20 and 22, retaining each of the outer bearing inserts 42. Each of the end caps 56 has disposed within its inner face an end cap seal back for bushing 58, and each of the end caps 56 is held in place by a plurality of suitable high torque bolts 60 extending through the end cap into appropriately threaded bores 62 in the mass member 12.

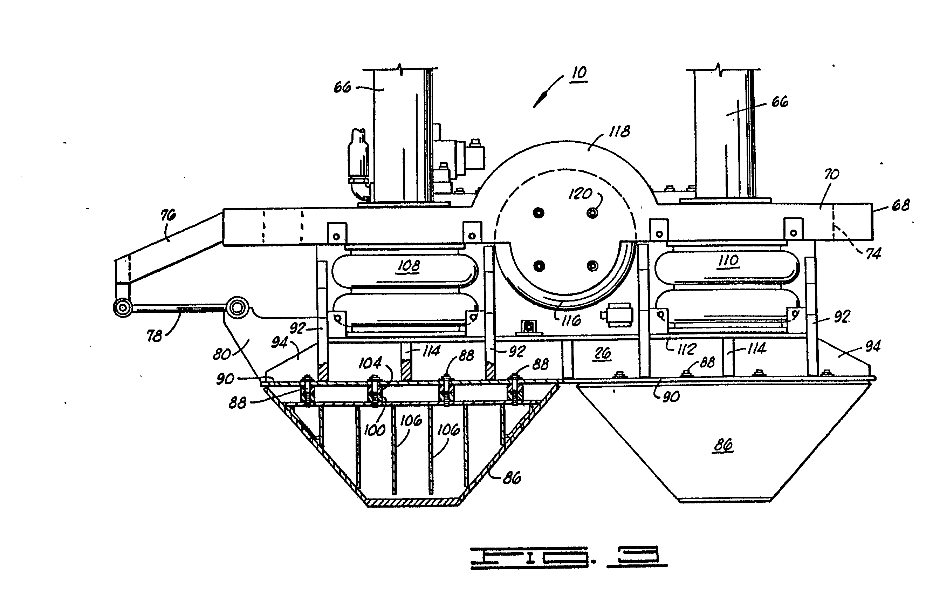

As shown in Figs. 1 and 3, the vibrator 10 is supported in conventional manner beneath a truck carrier or the like by means of opposite side pairs of vertical guide rods 64 and 66. As shown in Fig. 3, the opposite side guide rods 64 and 66 extend vertically in parallel where they are suitably reinforced and drivably interconnected to the truck carrier frame for controlled extension thereby to allow the truck weight to be supported on guide rod pairs 64 and 66 as an aid in energy coupling during vibration operation. The manner and specifics of vibrator suspension from truck carriers, either rear mounted of center mounted, is well documented in the prior art, particularly in Patent US—A—3,777,843, US—A—3,372,770 and US—A—3,306,391.

On one side, the vertical guide rod 66 extends down into rigid affixure with a support shoe bar 70 supporting one side of vehicle carrier in vibrationally damped manner, as will be described. On the opposite side, guide rods 64 extend down into rigid affixure with a support shoe bar 72 supporting that side of vehicle carrier in damped manner. As can be noted from Fig. 3, the support shoe 68 extends completely around the vibrator unit 10 in generally rectangular shape as opposite shoe bars 70 and 72 extend around the front and rear by bars 74. A shoe extension bar 76 serves to support pivotally connected radius rods 78 which serve for affixure on brace members 80 when the vibrator 10 is in its operational position. This maintains truck fore and after position on air bags and relative to base plates.

Each side of the vibrator 10 is coupled to the earth by means of a pair of inverted generally pyramidal cleat members 84 and 86. The particular cleat array as shown in Figs. 1 and 3 also differs in structure and function from the prior art which is best characterized by the U.S.A. Patent No. 3,159,232. In departure, the cleat structure of Figs. 1 and 3 varies in several aspects including the angle and shape of adjacent faces of the pyramidal cleats, as well as the method of support from base plate or frame structure.

Thus, the cleat members 86 (Fig. 3) are secured by a plurality of bolts 88 to a base plate 90 secured as by welding to end plate 26. The base/end frame structure is reinforced in all directions by means of a plurality of transverse angle brackets or gusset plates 92 as weld-affixed in support, and a plurality of gusseting angle plates 94 welded across the front and rear edges of base plate 90.

The identical construction is used on the other side of vibrator 10 in the securing of cleat members 84 to a base plate 96 by means of a plurality of bolts 88. Base plate 96 is again welded at right angles to opposite end plate 24 with transverse reinforcement provided by weld-affixed angle plate 98 and forward and rear angle brackets 94. Cleats 84 are provided with toothed bars 100, a plurality in parallel array, as welded on a support plate 102 of cleat member 84, and these are formed for mating engagement with a like plurality of toothed bars 104 welded to the underside of base plate 96 thereafter to be secured by bolts 88 in suitably placed bores. The internal portion of cleat member 84 includes a plurality of parallel arrayed stiffner plates 106 as aligned in transverse orientation to vibrator 10. The manner of securing to the base plate 90 and the internal structure of the opposite side of cleat members 86 is identical to that of the members 84.

The vibrator 10 is actually supported from the end plates 24 and 26 as rigidly secured to cleat members 84 and 86, and vibration damping coupling is provided with respect to the upper support members or guide rods 64 and 66. Thus, and referring particularly to Fig. 3, vertical support is provided by air springs 108 and 110 as secured beneath the underside of shoe bar 70 and a support plate 112 which is welded in parallel alignment over base plate 90 and supported by plural, parallel weld-affixed insert plates 114. The upper and lower portions of air springs 108 and 110 are secured to their respective receiving services by means of bolts (not shown) in conventional manner. The particular air springs 108 and 110 utilized are those known as the double convolution type, a well-known type that is commercially available from the Industrial Rubber Products Dvision of Firestone Rubber Company, Nobelsville, Indiana. Lateral resilient support is then afforded by a horizontal air spring 116 which is secured between a central arcuate portion 118 of support shoe bar 70 by the conventional affixure with bolts 120, and the remaining end is affixed to the outer surface of end plate 26 thereby completing the two degrees of vibrationally damped suspension. The opposite end of vibrator 10 is supported in identical manner with a pair of vertical air springs 122 as affixed between support shoe bar 72 and support plate 124, and lateral suspension is provided by means of an air spring 126 as secured between support shoe bar 72 and the end plate 24.

Referring again to Figs. 1 and 2, each of the rods 20 is attached to the end plate 24, and each of the rods 22 is attached to the end plate 26 by a plurality of suitable screws (not shown extending through the end plates for affixure in appropriately threaded bores in respective rods 20 and 22. Conventional O-ring seal means (not shown) are utilized between the rods 20 and 22 and their respective end plates 24 and 26 in order to provide the requisite fluid-tight pressure seal. A manifold 130 and conventional form of servovalve 132 are mounted on the top of base plate 26 in communication with supporting orifices formed therein for communication with the piston rod ends 22.

As shown in Fig. 2, hydraulic fluid ports 134 and 136 are disposed within piston rod ends 22 in communication with respective chambers 44 and 46. The ports 134 and 136 are similarly in communication with ports through end plate 26 and intercommunication with the paralleling manifold 130 in well-known manner. A hydraulic fluid bleed-back port 138 is disposed within rod ends 20 to provide communication between points adjacent the bearing inserts 40 and 42, and a return port within end plate 24 leading to the low pressure hydraulic storage as shown by arrow 140 (Fig. 1).

Mechanical bumpers 142 (Fig. 2) are utilized to safeguard against shock loading of the end plates on excessive stroke or impulse. Thus, axially aligned bores 144 are formed on each side of mass 12 and the bores then receive a suitable resilient plastic or rubber insert 135 in force fit, with insertion of a metallic bumper piston 148 thereover, e.g., a bronze piston. Suitable retaining collar means may be utilized to insure positioning of bumper piston 148 at all times.

The manner of operation of the transducer 10 is as follows. The high pressure fluid flows from the high pressure hydraulic supply through the manifold 130 and servovalve 132 in controlled alternation to each pair of the ports 134 and 136. The stable center position of the piston member relative to the mass member is maintained by feedback from a conventional linear transformer mounted between the reaction mass 12 and the frame 26 in a manner similar to that shown in Patent US—A—3,159,233 to Clynch et al, such linear transformer (LVDT) being well-known in the art. The high pressure fluid then flows through the ports 134 to the chambers 44, and through the ports 136 to the chambers 46 in alternation. When high pressure is flowing to the chambers 44, the chambers 46 are then communicated through the ports 136, manifold 130, the servovalve 132, and back through the manifold 130 to the lower pressure hydraulic storage. When high pressure fluid is flowing to the opposed chambers 46, the chambers 44 are similarly communicated with the low pressure hydraulic storage through the ports 134, manifold 130 and servovalve 132. In this manner, when the high pressure fluid is diverted to the chambers 44, the mass member 12 moves to the left relative to the piston members 16, and then alternately, when the high pressure fluid is diverted to the chambers 46, the mass member moves back to the right.

All of the necessary porting is disposed within the two or more piston members 16 and the end frames 24 and 26, and all parallel manifolding and valving is attached directly to the end frames. There is no porting within the mass member 12, therefore there are no hydraulic or electrical connections to the mass member. This permits the mass member 12 to be totally enclosed, thereby preventing dirt and other foreign matter from contacting the moving parts. Such total enclosure is effected by the upper and lower cover plates 28 and 30.

Referring now to Fig. 4, another embodiment of the present invention is indicated generally by the reference numeral 200. The transducer 200 is used for generating seismic compressional waves. It employs a reaction mass member 202, a frame 204, a pair of piston members 206, and manifold 208, and a servovalve 210, all of which inter-relate in a manner similar to that of the analogous components of the transducer 10. The piston members 206 contain porting similar to that of the transducer 10, except that it is more convenient in the embodiment of the transducer 200 to have all three of the ports exit the piston members at the upper end.

In its operation the transducer 200 is analogous to the transducer 10, with the exception that for the pressure wave transducer 200, the construction of the coupling plate 216 may be different from that of a coupling plate for a shear wave transducer. The details of construction of hold down means and coupling plates for pressure wave transducers are known to the art, as is shown, for example, by Patent US—A—3,159,233 to Clynch et al and Patent US—A—3,159,232 to Fair.

While the present invention is particularly described utilizing two parallel disposed hydraulic cylinder assemblies, it should be understood that it is well contemplated to use greater multiples of such hydraulic drive elements as aligned within the reaction mass. The use of more than two cylinder/piston elements will greatly enhance the ability to design larger, more stable seismic energy vibrators capable of greater frequency control and reliability.

The use of multiple hydraulic drive cylinders in pressure (P) wave vibrators has proven an advantage in enabling better distribution of force along the entire base plate. Thus, the prior art problems of concentrating forces at the center of the base plate, and thus causing extreme flexing, can be obviated, e.g., by utilizing a plurality of parallel aligned drive cylinders within a single mass and spaced across the associated base plate.

**Claims**

1. A transducer for inducing waves in an elastic medium, said transducer having a mass member (12), a cylinder bore means (14) extending through said mass member, piston member means (16) reciprocally disposed in said cylinder bore means (14) including a piston (18) and a piston rod (20, 22) extending out of each side of the cylinder bore means (14), and a frame inter-connecting the oppositely extending ends of said piston rods (20, 22), said frame including first and second end plate means (24, 26) rigidly integral with said frame and having cleat means (84, 86) thereon for engaging the surface of the elastic medium (82) and means (130, 132) for simultaneously introducing fluid under pressure into the cylinder bore means (14) alternately on opposite sides of the piston (18), said transducer being characterized in that: said mass member (12) has a plurality of parallel offset cylinder bores (14) extending therethrough and a corresponding plurality of pistons (18) and piston rods (20, 22); first and second port means (134, 136) are formed through one of the end plate means (24, 26) and extend axially through respective piston rods (20, 22), said first port means (134) communicating with a first side of each of said cylinder bores (14) and said second port means (136) communicating with the opposite side of each of said cylinder bores (14); the fluid introducing means (130, 132) are provided for concurrently introducing fluid on the said side of the pistons (18) for simultaneously reciprocating the pistons (18) in concert; and closure members (28, 30) are provided rigidly integral with said frame and enclosing said mass member (12) and said piston member means (16) between said first and second end plate means (24, 26).

2. A transducer as claimed in Claim 1, further characterized in that: the cleat means (84, 86) on the frame engaging the surface of the elastic medium (82) are disposed generally parallel but axially normal to the oppositely extending piston rods (20, 22), whereby upon reciprocation of the piston members (16) relative to the mass member (12) the frame will be reciprocated by the reaction force in a direction parallel to the surface of the elastic medium (82) to couple shear waves into the elastic medium.

3. A transducer as claimed in Claim 1 further characterized in that: the cleat means (216) on the frame (204) got engaging the surface of the elastic medium (82) are disposed generally perpendicular to the oppositely extending piston rods (20, 22), whereby upon reciprocation of the piston members (16) relative to the mass member (12) the frame will be reciprocated by a reaction force in a direction generally normal to the surface of the elastic medium (82) to couple compressional waves into the elastic medium.

4. A transducer as claimed in Claim 1 or 2 which further comprises: a bearing insert (42) disposed within each end of the cylinder bore (14) to slidingly receive one of the piston rods (20, 22), each of said bearing inserts (42) having disposed within its inner diameter, a fluid collecting groove (50 or 52) to collect that fluid which flows between the cylinder bore (14) and the piston rods (20, 22).

5. A transducer as claimed in Claim 4 which is further characterised to include: bumper means (142) of resilient construction disposed in axial alignment on each end of said mass member (12) and in contacting attitude to said frame.

## Revendications

1. Tranducteur pour provoquer des ondes dans un milieu élastique, lequel transducteur comprend un élément formant masse (12), un alésage cylindrique (14) s'étendant à travers l'élément formant masse, un élément à piston (16) monté dans ledit alésage cylindrique (14) de façon à pouvoir effectuer un mouvement alternatif et comportant un piston (18) et une tige de piston (20, 22) s'étendant au-delà de chaque côté de l'alésage cylindrique (14), et un cadre reliant entre elles les extrémités opposées des tiges de piston (20, 22), ledit cadre comportant des première et seconde plaques terminales (24, 26) rigidement solidaires du cadre et ayant des organes d'assujettissement (84, 86) montés sur lui pour coopérer avec la surface du milieu élastique (82) et des moyens (130, 132) pour introduire simultanément du fluide sous pression dans l'alésage cylindrique (14) alternativement d'un côté et de l'autre du piston (18), ledit transducteur étant caractérisé en ce que: l'élément formant masse (12) présente plusieurs alésages cylindriques parallèles décalés (14) s'étendant à travers ce dernier et un nombre correspondant de pistons (18) et de tiges de piston (20, 22); des premier et second canaux (134, 136) sont formés à travers l'une des plaques terminales (24, 26) et s'étendent axialement à travers les tiges de piston respectives (20, 22), ce premier canal (134) communiquant avec un premier côté de chacun des alésages cylindriques (14) et le second canal (136) communiquant avec le côté opposé de chacun des alésages cylindriques (14); les moyens d'amenée du fluide (130, 132) sont prévus pour amener du fluide concurremment sur le même côté des pistons (18) afin de faire effectuer simultanément aux pistons (18) leur mouvement alternatif de façon conjugée; et il est précu des éléments de fermeture (28, 30) rigidement solidaires du cadre et qui enferment l'élément formant masse (12) et l'élément à piston (16) entre les première et seconde plaques terminales (24, 26).

2. Transducteur selon la revendication 1, caractérisé en outre en ce que les organes d'assujettissement (84, 86) montés sur le cadre et coopérant avec la surface du milieu élastique (82) sont disposés d'une manière générale parallèlement mais axialement à angle droit par rapport aux tiges de piston opposées (20, 22), de sorte que lors du mouvement alternatif des éléments à piston (16) par rapport à l'élément formant masse (12) le cadre sera amené par une force de réaction à effectuer un mouvement alternatif dans une direction parallèle à la surface du fluide élastique (82) pour provoquer des ondes de cisaillement dans le milieu élastique.

3. Transducteur selon la revendication 1, caractérisé en outre en ce que l'organe d'assujettissement (216) monté sur le cadre (204) pour coopérer avec la surface du milieu élastique (82) est disposé d'une manière générale perpendiculairement aux tiges de piston opposées (20, 22), de sorte que lors du mouvement alternatif des éléments à piston (16) par rapport à l'élément formant masse (12) le cadre sera amené par une force de réaction à effectuer un mouvement alternatif dans une direction sensiblement perpendiculaire à la surface du milieu élastique (82) de façon à provoquer des ondes de pression dans le milieu élastique.

4. Transducteur selon la revendication 1 ou 2, caractérisé en ce qu'il comprend en outre une garniture formant coussinet (42) montée à l'intérieur de chaque extrémité de l'alésage cylindrique (14) pour recevoir à coulissement l'une des tiges de piston (20, 22), chacune des garnitures formant coussinets (42) ayant ménagée dans sa surface intérieure une rainure (50 ou 52) collectrice de fluide pour recueillir le fluide s'écoulant entre l'alésage (14) et les tiges de piston (20, 22).

5. Transducteur selon la revendication 4, caractérisé en outre en ce qu'il comprend des moyens amortisseurs (142) de type élastique montés de manière axialement alignée à chaque extrémité de l'élément formant masse (12) et disposés de façon à entrer en contact avec le cadre.

## Patentansprüche

1. Ein Wandler zum Induzieren von Wellen in einem elastischen Mittel, wobei der besagte Wandler ein Massenglied (12) aufweist, sich durch das besagte Massenglied erstreckende Zylinderbohrungseinrichtungen (14), in besagter Zylinderbohrungseinrichtung (14) hin und hergehend angeordnete Kolbengliedeinrichtung (16), mit einem Kolben (18) und mit je einer sich von jeder Seite der Zylinderbohrungseinrichtung (14) erstreckenden Kolbenstange (20, 22), und mit einem die sich in gegenüberliegender Richtung erstreckenden Enden der besagten Kolbenstangen (20, 22) verbindenden Rahmen, wobei der besagte Rahmen erste und zweite Endplatteneinrichtungen (24, 26) aufweist, die starr und fest mit dem besagten Rahmen verbunden sind und Klammereinrichtungen (84, 86) darauf aufweisen, zum Eingriff mit der Fläche des elastischen Mittels (82) und Einrichtungen (130, 132) zur gleichzeitigen Einführung von Druckflüssigkeit in die Zylinderbohrungseinrichtung (14) wechselweise auf gegenüberliegenden Seiten des Kolbens (18), wobei des besagte Wandler dadurch gekennzeichnet ist, daß: das besagte Massenglied (12) eine Mehrzahl von parallel abgesetzten Zylinderbohrungen (14) aufweist, die sich dadurch erstrecken und mit einer entsprechenden Mehrzahl von Kolben (18) und Kolbenstangen (20, 22); erste und zweite Öffnungseinrichtungen (134, 136) in einer der Endplatteneinrichtungen (24, 26) angeordnet, die sich axial durch entsprechende Kolbenstangen (20, 22) erstrecken, wobei die erste Öffnungseinrichtung (134) mit einer ersten Seite jeder der besagten Zylinderbohrungen (14) in Verbindung steht und die besagten zweiten Öffnungseinrichtungen (136) mit der gegenüberliegenden Seite jeder der besagten Zylinderbohrungen (14) in Verbindung stehen; die Flüssigkeitseinführungsmittel (130, 132) zum gleichzeitigen Einführen von Flüssigkeit auf der gleichen Seite der Kolben (18) zum gleichzeitigen Hin- und Herbewegen der Kolben (18) miteinander vorgesehen sind; und Schließglieder (28, 30) fest verbunden mit dem besagten Rahmen vorgesehen sind, und das besagte Massenglied (12) und die besagte Kolbengliedeinrichtung (16) zwischen den besagten ersten und zweiten Endplatteneinrichtungen (24, 26) einschließt.

2. Ein Wandler nach Anspruch 1, weiterhin dadurch gekennzeichnet, daß: die auf dem Rahmen mit der Oberfläche des elastischen Mittels (82) in Eingriff stehenden Klammermittel (84, 86) im wesentlichen parallel, jedoch axial senkrecht zu den sich in gegenüberliegenden Richtungen erstreckenden Kolbenstangen (20, 22) angeordnet sind, wodurch bei Hin- und Herbewegung der Kolbenglieder (16) mit Bezug auf das Massenglied (12) der Rahmen durch eine Reaktionskraft hin und her bewegt wird, in einer Richtung, die sich parallel zur Oberfläche des elastischen Mittels (82) erstreckt, um Scherwellen in das elastische Mittel einzukoppeln.

3. Ein Wandler nach Anspruch 1, weiterhin dadurch gekennzeichnet, daß: die Klammermittel (216) auf dem Rahmen (204) zum Eingriff mit der Oberfläche des elastischen Mittels (82) im wesentlichen senkrecht zu den sich in gegenüberliegenden Richtungen erstreckenden Kolbenstangen (20, 22) angeordnet sind, wodurch bei Hin- und Herbewegung der Kolbenglieder (16) mit Bezug auf das Massenglied (12) der Rahmen durch eine Reaktionskraft in einer Richtung hin und her bewegt wird, die sich im wesentlichen rechtwinklig zur Oberfläche des elastischen Mittels (82) erstreckt, um Druckwellen in das elastische Mittel einzukoppeln.

4. Ein Wandler nach Anspruch 1 oder 2, der weiterhin aus folgendem besteht: einem innerhalb jedem Ende der Zylinderbohrung (14) befindlichen Lagereinsatz (42) aur gleitenden Aufnahme einer der Kolbenstangen (20, 22), wobei jeder der besagten Lagereinsätze (42) innerhalb seines inneren Durchmessers eine Flüssigkeitssammelnute (50 oder 52) aufweist, zum Sammeln der Flüssigkeit, die zwischen der Zylinderbohrung (14) und den Kolbenstangen (20, 22) fließt.

5. Ein-Wandler nach Anspruch 4, weiterhin dadurch gekennzeichnet, daß et folgendes aufweist: Puffermittel (142) von nachgiebigem Aufbau, in axialer Ausrichtung an jedem Ende des besagten Massenglieds (12) und in berührender Lage mit besagtem Rahmen angeordnet.

FIG. 1

0 015 329

FIG. 2

FIG. 4

2

FIG. 3